# EUROPÄISCHE PATENTSCHRIFT

(11) **EP 0 373 577 B1**
(45) Veröffentlichungstag und Bekanntmachung des Hinweises auf die Patenterteilung: **10.03.1993**
(21) Anmeldenummer: 89122883.5
(22) Anmeldetag: 12.12.1989
(51) Int. Cl.: C02F 11/10, C10B 53/00, C02F 11/12

(54) **Verfahren zur Aufbereitung von Klärschlämmen und/oder Industrieschlämmen mit organischen Anteilen mittels des Konversionsverfahrens**
Process for the treatment of sewage sludges or industrial sludges with organic constituents by means of the conversion process
Procédé de traitement de boues d'épuration ou de boues industrielles à parties organiques par le procédé de conversion

(30) Priorität: 16.12.1988 DE 3842446
(43) Veröffentlichungstag der Anmeldung: 20.06.1990
(73) Patentinhaber: Thyssen Still Otto Anlagentechnik GmbH, 44789 Bochum (DE); Hartmann, Helmut Dr., D-67595 Bechtheim (DE); Nehring, Christoph, D-45136 Essen (DE)
(72) Erfinder: Hartmann, Helmut, Dr., D-6521 Bechtheim (DE); Nehring, Christoph, D-4300 Essen (DE); Stalherm, Dieter, Dr., D-4350 Recklinghausen (DE); Dungs, Horst, D-4690 Herne (DE); Taron, Herbert, D-4350 Recklinghausen (DE); Wolf, Roland, D-4630 Bochum 1 (DE)
(74) Vertreter: Dahlkamp, Heinrich-Leo, Dipl.-Ing.

(56) Entgegenhaltungen:
- EP-A- 0 140 811
- EP-A- 0 297 424
- CH-A- 540 858
- DE-A- 3 227 896
- DE-A- 3 513 541

## Beschreibung

Die Erfindung betrifft ein Verfahren zur Aufbereitung von Klärschlämmen und/oder Industrieschlämmen mit organischen Anteilen mittels des Konversionsverfahrens nach dem Oberbegriff des Anspruches 1.

Bei dem Konversionsverfahren werden mechanisch vorentwässerte Schlämme vorgetrocknet, die austretenden Brüden kondensiert, gereinigt und einem Kläranlagenvorlauf zugeleitet, das Trokkengut weiter auf Konversionstemperatur erhitzt und dabei das restliche freie Wasser, das stöchiometrische Wasser sowie die organischen Anteile als Brüden abgetrennt. Die Brüden können kondensiert und mechanisch in eine Ölphase und eine Wasserphase getrennt werden. Die verbleibenden Produkte (Ölphase und Konversionsfeststoffrückstand) stellen werthaltige Rohstoffe dar. Der Feststoffrückstand findet Verwendung als Festbrennstoff, Filtermaterial oder dergleichen, während aus der Ölphase Fettsäuren gewonnen werden, wobei das verbleibende Restöl wieder als Brennstoff genutzt wird.

Zur Trocknung der mechanisch vorentwässerten Schlämme ist es bekannt, direkt beheizte Schlammtrocknungssysteme einzusetzen. Hierbei ist die Abgasreinigung, d. h. die Trennung der Feinstpartikel des Trockengutes aus dem Heizgasstrom, nur unter kostspieligen gerätetechnischen Aufwendungen (beheizte Textil-filter oder dergleichen) möglich. Ein weiterer Nachteil besteht darin, daß bei staubförmigem, nicht vorgranuliertem Trockengut, vor allem bei Stetigförderern und Behältern, Kompressionen im Produkt auftreten können, die einen angestrebten gleichmäßigen Massenfluß unmöglich machen.

Aus der EP 0 038 420 Al ist ein Verfahren und eine Anlage zum Veraschen von Klärschlamm bekannt, bei dem vorgetrockneter Klärschlamm in einer ersten Behandlungsstufe bis auf Restfeuchtigkeit getrocknet und anschließend in einer zweiten Behandlungsstufe unter Luftabschluß bei Temperaturen bis zu 600 °C vollständig pyrolysiert wird, so daß als Feststoffprodukt lediglich Asche anfällt.

Aus der DE 32 27 896 Al ist ein Verfahren zur thermischen Behandlung, insbesondere Verschwelung, organischer Abfälle, insbesondere von thermisch vorentwässertem Klärschlamm, bekannt, bei dem das Material in einem kombinierten Drehtrommeltrockner mit indirekter Beheizung getrocknet und verschwelt wird und nach der Verschwelung das Gemisch aus Trocknungsbrüden und Schwelgas in einer Kondensationsanlage in die Fraktionen nichtkondensierbares Gas, Wasser und flüssige Kohlenwasserstoffe getrennt wird.

In der EP-A-0 140 811 ist ebenfalls ein Verfahren beschrieben, bei dem vorgetrockneter Klärschlamm im Innenraum eines indirekt beheizten Stetigförderers auf Konversionstemperatur aufgeheizt und bis zum Austrieb der flüchtigen Komponenten aus dem Feststoffprodukt auf Konversionstemperatur gehalten wird und die bei der Konversion anfallenden gasförmigen Produkte kondensiert und weiterverarbeitet werden. Über die Behandlung der bei der Vortrocknung außerhalb der Konversion anfallenden Brüden ist dabei nichts gesagt.

Der Erfindung liegt die Aufgabe zugrunde, die Verfahrensschritte zu verbessern, den Verfahrensablauf zu optimieren, den Grad der Wärmerückgewinnung zu erhöhen, die Qualität der erzeugten Produkte zu verbessern und vor allem die prozeßinterne Entsorgung von schadstoffhaltigen Nebenprodukten sicherzustellen.

Zur Lösung der Erfindung ist vorgeschlagen, daß die bei der Trocknung und Konversion ausgetriebenen Brüden und leichtflüchtigen Komponenten für sich in getrennten Apparaten direkt mit im Teilkreislauf fremdgekühlt gefahrenem Kondensat kondensiert werden und die nichtkondensierbaren Gasanteile aus den Brüden und leichtflüchtigen Komponenten zur Entsorgung einer thermischen Nachverbrennung zugeführt werden.

Weitere Einzelheiten der Erfindung ergeben sich aus den Unteransprüchen 2 bis 11.

Die erfindungsgemäß vorgesehene direkte Kondensierung der bei der Trocknung ausgetriebenen Brüden und der bei der Konversion anfallenden leichtflüchtigen Komponenten in getrennten Apparaten jeweils über Einspritzung fremdgekühlten Kondensates im Kreislauf dient dazu, Verklebungen an den Kondensatorflächen bei indirekter Kondensation zu vermeiden, die durch Flüssigkeitskomponenten (Fettsäuren) verursacht werden, deren Verzähungstemperaturen im Bereich der Kondensationstemperaturen liegen.

Zur Verbesserung der Gesamtwärmebilanz des Prozesses wird gemäß Anspruch 2 vorgeschlagen, die Abwärme dieser thermischen Nachverbrennung wenigsten teilweise zur Erwärmung des Wärmeträgermediums der indirekten Trocknung zu verwenden. Zu dem gleichen Zweck dient auch die besondere Rauchgasführung nach Anspruch 3.

Die gemäß Anspruch 4 vorgeschlagene direkte Kondensation des Konversionsbrüdens mit der Wasserkomponente im fremdgekühlten Kreislauf erweist sich gegenüber einer direkten Kondensation mit Öl/Wasserkondensat als vorteilhaft, da hier die Fettsäureanteile in der Ölphase sehr hoch sind und leicht Verklebungserscheinungen auftreten. Die Abtrennung der Wasserphase aus dem Gesamtkondensat erfolgt in einem Schwerkrafttrenner hinter der Kondensationsstufe.

Genauso wie der in der Kondensationsstufe auftretende nichtkondensierbare Gasanteil wird gemäß Patentanspruch 5 nach der Konversion auch das aus dem Kondensat abgetrennte Wasser analog zur Brüdenkondensation aus der Trocknung der thermischen Nachverbrennung zugeführt.

Die aufwendige Abtrennung von Feinstpartikeln aus dem Brüden wird zweckmäßig gemäß Anspruch 6 von der Gasseite auf die Kondensationsseite verlegt und durch mechanische Flüssigkeitsfilter auf einfache und kostengünstige Weise vorgenommen.

Gemäß Anspruch 7 kann eine Vorgranulation durch Zugabe und Mischen von Trockengut in das nasse Eingangsprodukt erfolgen. Durch das gemäß Anspruch 8 vorgeschlagene Mischungsverhältnis wird der Bereich starker Klebefähigkeit von Schlämmen, der zwischen 35 und 55 % Trockensubstanzgehalt liegt, umgangen.

Aus dem Vorgranulat auf der Trocknungsseite, das sich durch eine Mischung gemäß Patentanspruch 7 bildet, werden gemäß Anspruch 9 Pellets, vorzugsweise Rundkornpellets, gebildet, und zwar aus dem Vorgranulat, durch die rotierenden Bewegungen bei der indirekten Vortrocknung, beispielsweise mittels eines Tauchscheibentrockners. Die Rundkornpellets härten während der Trocknung ausreichend aus. Die Form der Rundkornpellets bleibt bis zum Austritt aus der Konversionsstufe erhalten. Diese Pellets erlauben einen problemlosen, stetigen Transport des Feststoffproduktes.

Eine Nutzung des Feststoffproduktes z. B. als Festbrennstoff bedingt eine Verkleinerung der Feststoffe auf eine definierte Sieblinie. Hierfür wird gemäß Anspruch 10 eine Prallmahlung im Gasstrom vorgeschlagen, die durch Variation der Sichterdrehzahl gegenüber der Pralltellerdrehzahl eine stufenlose Produktion nahezu jeder gewünschten Sieblinie ermöglicht.

Als Gasstrom wird gemäß Anspruch 11 kühle Umgebungsluft vorgeschlagen, so daß der Mahlvorgang gleichzeitig zur Kühlung der Feststoffe von der Konversionstemperatur auf die Endlagertemperatur führt.

Ein als Vorrichtung zur Durchführung des Verfahrens vorgesehener kontinuierlicher Konversionsofen für Klärschlämme und/oder Industrieschlämme mit geteilten Reaktionsräumen kann auf verschieden Weise ausgebildet sein. Als kontiuierliches Konversionsgerät kann sowohl ein Drehtrommelofen als auch ein Vibrationsrohrofen ausgebildet sein, welche beide indirekt erhitzt werden.

Der Drehtrommelofen hat den Vorteil, daß dieser mit einem relativ großen Durchmesser ausgeführt werden kann, was entsprechend hohe Durchsatzleistungen bei einem konstanten Durchmesser-/Längenverhältnis ermöglicht. Die Trennung der Reaktionsräume kann hier durch ein Aufteilorgan erfolgen. Hierbei haben die Schneckengänge, die zwischen dem Außenmantel des Drehtrommelrohres und dem inneren Rohrteil angeordnet sind, die Eigenschaft eines Zwangsförderers für das Feststoffprodukt. Parallel zur Trommellängsachse zwischen den Schneckengängen sternförmig eingesetzte Stegbleche weisen einen schmalen Durchlaß zwischen ihrer Oberkante und dem Außenmantel der Drehtrommel auf. Mindestens einer dieser Durchlässe ist immer in den Produktionsstrom getaucht, so daß das gasförmige Produkt am Durchgang gehindert ist und lediglich die vom Feststoffprodukt eingeschlossene Gasmenge sowie das Feststoffprodukt passieren können. Vom Prozeß her kann diese Art der Gasabdichtung als ausreichend angesehen werden. Die mögliche Durchsatzmenge an Feststoffprodukt hängt von der richtigen Auswahl der radialen Durchlaßhöhe sowie der Trommeldrehzahl ab.

Die vorgeschlagene Ausführung als Drehtrommel erleichtert im Aufheizraum das Erreichen hoher Aufheizgeschwindigkeiten dadurch, daß - ebenfalls abhängig von der Trommeldrehzahl - Verweilzeiten des Feststoffproduktes in diesem Raum durch mitdrehende Schneckeneinbauten als Fördereinbauten festgelegt werden, wobei das Feststoffprodukt ausschließlich an der Trommelwand (höchster Wärmeübergang) verbleibt.

Zur Erzielung einer innigen Berührung Brüden/Feststoffprodukt im Konverionsraum sind vorzugsweise Rieseleinbauten vorgesehen.

In bevorzugter Ausgestaltung der Erfindung kann weiterhin vorgesehen sein, daß die Brüden im Konversionsraum das Feststoffprodukt alternativ im Gleich- oder Gegenstrom durchfließen. Die jeweilige Umstellung von einer auf die andere Betriebsart läßt sich durch Ausziehen/Einstecken des Brüdenübergaberohres bzw. des Brüdenabzugsrohres leicht erreichen. Hierbei ist von Vorteil, daß eine schnelle Umstellbarkeit auf jeweils eine Betriebsart durch einfache Maßnahmen auf der Außenseite des Ofens möglich ist. Die Schraubhalterungen des Brüdenübergaberohres und des Brüdenabzugsrohres können jeweils Druck auf die Rohre in Richtung Aufteilorgan ausüben, so daß die Keilabdichtung des Brüdenübergaberohres auf das Trennschott im Aufteilungsorgan dichtgedrückt wird. Mit speziellen Steckpackungen wird das schnelle Auswechseln des Brüdenabzugsrohres dichtungsseitig wesentlich erleichert.

Bei Ausgestaltung des Stetigförderers als Vibrationsförderer können zwar nur begrenzte Durchmesser und somit Durchsatzleistungen bei konstantem Durchmesser-/Längenverhältnis ausgeführt werden. bei großen Durchsatzleistungen ist daher eine Parallelschaltung mehrerer Vibrationsrohre in einer Heizkammer erforderlich. Dieser Mehraufwand wird jedoch ausgeglichen durch die wesentlich geringeren Herstellungskosten eines Vi-brationsrohres im Vergleich zu einem Drehtrommelrohr.

Das vorgesehene Aufteilorgan kann denkbar einfach gehalten werden: Es besteht aus einer vertikalen Trennscheibe mit einem sekantenförmigen Durchlaß zwischen Vibrationsrohrmantel und Scheibenkante.

Die Durchlaßmenge für das Feststoffprodukt hängt von der richtigen Auswahl der Sekantenhöhe und den erzeugten Schwingungen an dieser Stelle ab. Das Vibrationsrohr kann feststoffseitig einbautenfrei gestaltet werden, da die über die Rohrlänge beliebig variablen Schwingungsformen eine Bildung von Staustrekken oder Strecken mit schnellerem Feststoffdurchlauf erlauben. Eine Variation der Schwingungsformen kann durch die Anordnung von zwei gleichzeitig arbeitenden Schwingungserregern erzeugt werden, wobei jeder Erreger unabhängig vom anderen gefahren werden kann. Eine schnelle Umstellung von Gleichstrom- auf Gegenstrombetrieb kann durch Öffnen/Schließen von Sperrschiebern bewerkstelligt werden. Diese Sperrschieber können so angeordnet sein,daß ihre Bedienung durch Montageöffnungen in der Heizkammerwand leicht möglich ist. Um eine innige Durchdringung des Feststoffproduktes durch den Brüden im Konversionsraum zu intensivieren, können Brüdenleitbleche vorgesehen sein, die eine zwangsweise Durchleitung des Brüdens durch das Feststoffprodukt bewirken.

In den beigefügten Zeichnungen sind schematische Ausführungsbeispiele der Erfindung dargestellt. Es zeigen
Figur 1 ein Fließschema;
Figur 2 eine schematische Längsschnittdarstellung durch ein erstes Ausführungsbeispiel einer Vorrichtung gemäß Erfindung;
Figur 3 eine schematische Längsschnittdarstellung durch ein zweites Ausführungsbeispiel der Vorrichtung gemäß der Erfindung.

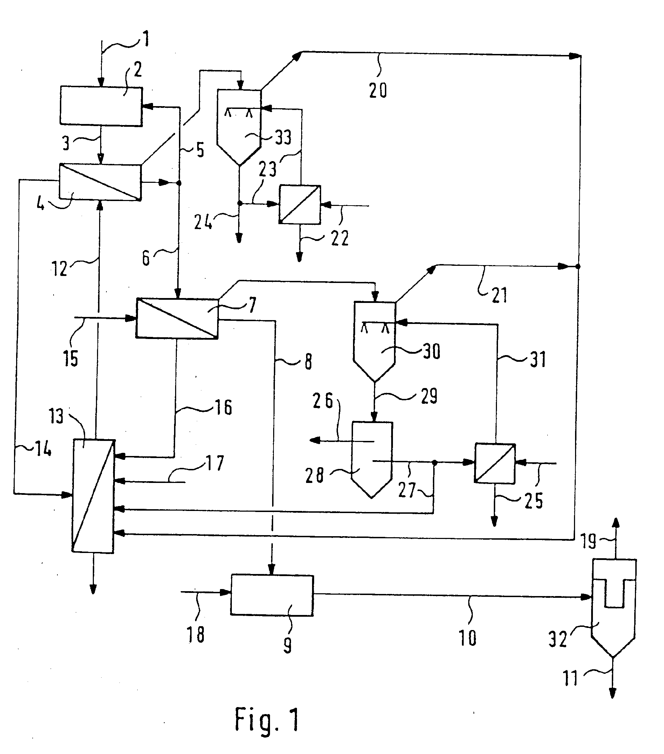

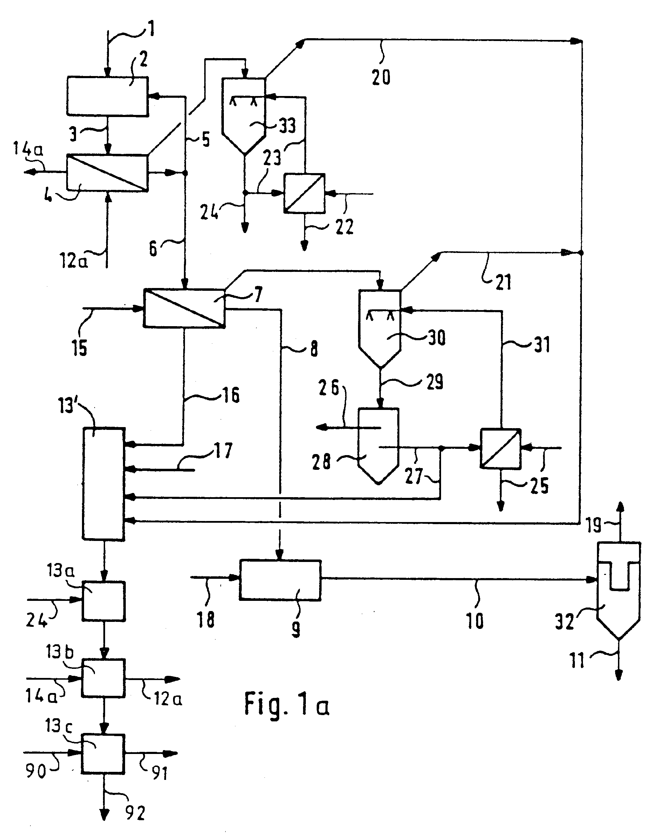

In dem Fließschema gemäß Figur 1 ist mit (1) die Naßschlammaufgabe bezeichnet. Naßschlamm wird einem Granulierungsmischer (2) zugeführt. Granulat (3) wird einem mit (4) bezeichneten indirekten Trockner zugeleitet. Mit (5) ist eine Trockengutrückfuhr bezeichnet. Eine Trockengutabfuhr trägt die Bezugsziffer (6). Das Feststoffprodukt (8) wird einer mit (9) bezeichneten Prallmühle mit Sichter zugeführt. Mit (10) ist Mahlgut und Kühlluft bezeichnet. Zur Verladung geeignetes Mahlgut trägt die Bezugsziffer (11).

Mit (12) ist erhitztes Wärmeträgermedium bezeichnet. Ein Wärmetauscher für Wärmeträgermedium, thermische Nachverbrennung trägt die Bezugsziffer (13), während abgekühltes Wärmeträgermedium mit (14) gekennzeichnet ist. Der indirekt beheizten Konversion (7) wird mit (15) bezeichnetes Heißgas aus Konversion zugeleitet. Dem Wärmetauscher (13) wird Abwärme (16) zugeführt. Dem Wärmeträgermedium des Wärmetauschers (13) wird außerdem Fremdenergie (17) zugeleitet. Der Mahlanlage (9) wird Kühlluft (18) zugeleitet. Mit (19) ist an die Umgebungsluft abgegebenes gefiltertes Abgas bezeichnet. Nicht kondensierbarer Gasanteil aus Trocknungsbrüden trägt die Bezugsziffer (20), während nicht kondensierbarer Gasanteil aus Konversionsbrüden die Bezugsziffer (21) trägt. Kühlmittel ist mit (22) bezeichnet. Die Bezugsziffer (23) bezeichnet einen Kondensatkreislauf, während mit (24) eine Kondensatabfuhr bezeichnet ist. Kühlmittel wird entsprechend Bezugsziffer (25) zugeführt. Mit (26) ist die Öl-/Fettsäurephase bezeichnet, während die Wasserphase die Bezugsziffer (27) trägt. Ein Schwerkrafttrenner ist mit (28) bezeichnet, welchem Kondensat (29) zugeführt wird. Die Bezugsziffer (30) bezeichnet die Kondensation des Konversionsbrüdens. (31) bezeichnet Kreislaufwasser, (32) bezeichnet ein Mahlgutfilter und (33) die Kondensation des Trocknungsbrüdens.

In der Figur 1a ist ergänzend zur Figur 1 die Nutzung des Kondensates aus der Brüdenkondensation (33), das unter Umständen auch NH₃ enthalten kann, in der Weise vorgesehen, daß das Kondensat über Leitung (24) zur Quenchung des Rauchgases aus der thermischen Nachverbrennung (13′) dem Sprühkühler (13a) zugeführt wird. Das mit Wasserdampf angereicherte Rauchgas wird anschließend auf einem niedrigeren Temperaturniveau dem Wärmetauscher (13b) zugeführt und dort mit abgekühltem Wärmeträgermedium (14a) aus der Trocknung (4) beaufschlagt. Wegen des geringeren Temperaturniveaus des eintretenden wasserdampfhaltigen Rauchgases kann im Wärmetauscher (13) eine Hochtemperaturkorrosion vermieden werden und über (12a) sogar ein erhitztes Wärmeträgermedium mit höherer Temperatur als bei Leitung (12) von Figur 1 abgezogen werden und dem Trockner (4) zurückgeführt werden. Im Anschluß an den Wärmetauscher (13b) wird das Rauchgas in einer Rauchgasreinigung (13c) mit Kalk (90) beaufschlagt und über Leitung (91) werden die Reststoffe und über Leitung (92) das gereinigte Rauchgas abgezogen.

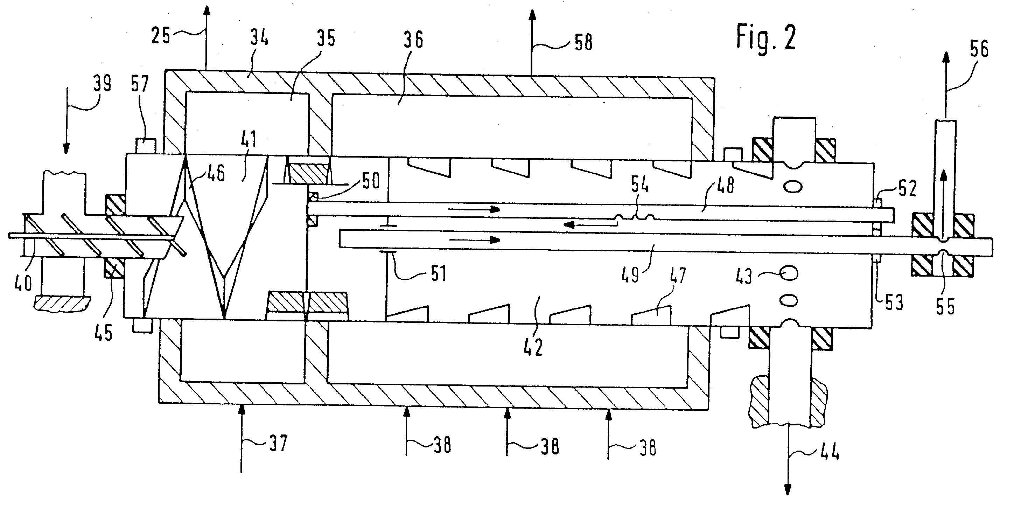

In Figur 2 ist ein als Drehtrommel ausgebildeter Stetigförderer in Gegenstromschaltung dargestellt.

Die Vorrichtung weist eine Heizkammer (34) auf, mit einer Aufheizraum-Heizkammer (35), Konversionsraum-Heizkammer (36), Heißgaszufuhren (37) und (38). Mit (39) ist die Trockengutzufuhr bezeichnet. Eine Eintragsschnecke trägt die Bezugsziffer (40) Ein Stetigförderer-Aufheizraum ist mit (41) und ein Stetigförderer-Konversionsraum mit (42) bezeichnet. Austragslöcher für das Feststoffprodukt tragen die Bezugsziffer (43), während der Feststoffprodukt-Austrag selbst mit (44) bezeichnet ist. Steckfähige Dichtungspackungen sind mit (45) bezeichnet. Weiterhin sind Fördereinbauten (46) und Rieseleinbauten (47) vorgesehen. Mit (48) ist ein Brüdenübergaberohr Aufheizraum-Konversionsraum bezeichnet. Ein Brüdenabzugsrohr trägt die Bezugsziffer (49). Ein Keilsteckanschluß für das Brüdenübergaberohr (48) ist mit (50) bezeichnet. Eine Fixiereinrichtung Brüdenabzugsrohr-Stetigförderer trägt die Bezugsziffer (51). Mit (52) ist eine Druckfixierung Brüdenübergaberohr und mit (53) eine Druckfixierung Brüdenabzugsrohr bezeichnet. Austrittsöffnungen für Brüden aus dem Brüdenübergaberohr tragen die Bezugsziffer (54), während Austrittsöffnungen Brüden aus dem Brüdenabzugsrohr die Bezugsziffer (55) tragen. Der Brüdenaustritt selbst ist mit (56) bezeichnet. Laufringe der Drehtrommel tragen die Bezugsziffer (57), und der Warmgasaustritt aus den Heizkammern ist mit (58) bezeichnet.

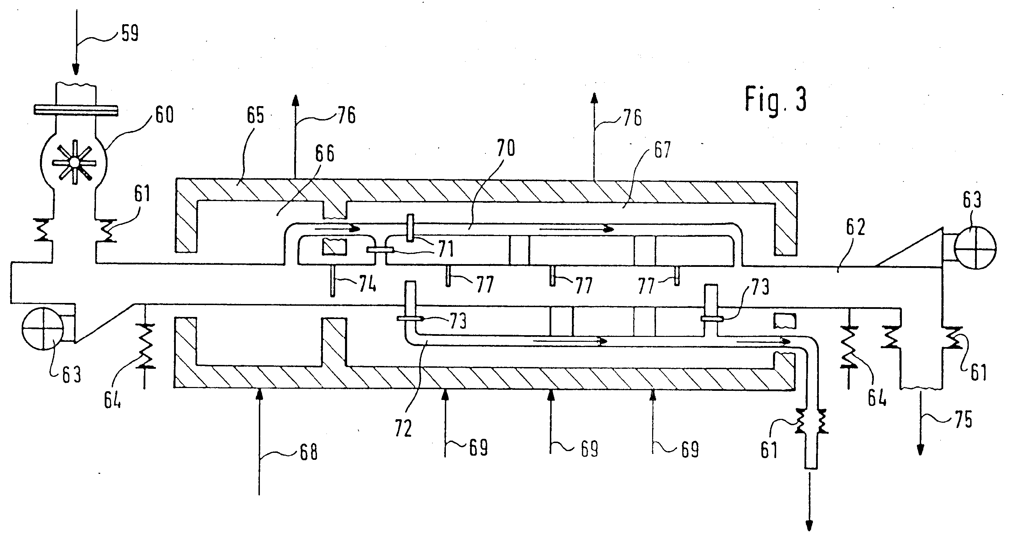

Der in Figur 3 als weiteres Ausführungsbeispiel dargestellte Stetigförderer ist als Schwingförderer ausgebildet. Hier ist der Trockenguteintrag mit (59) bezeichnet. Eine Eintragsschleuse trägt die Bezugsziffer (60). Mit (61) sind Abdichtungen gegen schwingende Massen bezeichnet, während ein als Vibrationsrohr ausgebildeter Stetigförderer die Bezugsziffer (62) trägt. Mit (63) ist ein Schwingungserreger bezeichnet. Ein Schwingungsaufnehmer trägt die Bezugsziffer (64). Mit (65) ist eine Heizkammer gekennzeichnet. Eine Heizkammer-Aufheizzone trägt die Bezugsziffer (66), während eine Heizkammer-Konversionszone die Bezugsziffer (67) trägt. Dem Aufheizraum wird Heißgas in Pfeilrichtung (68) zugeleitet, während dem Konversionsraum Heißgas in Pfeilrichtung (69) zugeführt wird. Mit (70) ist ein Brüdenübergaberohr Aufheizraum zu Konversionsraum bezeichnet. Ein Sperrschieber für Gleichstrom-/Gegenstrombetrieb trägt die Bezugsziffer (71). Mit (72) ist ein Brüdenabzugsrohr bezeichnet. Ein Sperrschieber für Gleichstrom-/Gegenstrombetrieb trägt die Bezugsziffer (73), während eine Trennwand Aufheizraum/Konversionsraum die Bezugsziffer (74) trägt. Mit (75) ist der Austrag Feststoffprodukt bezeichnet. Der Warmgasaustritt aus den Heizkammern trägt die Bezugsziffer (76). Mit (77) sind Brüdenleitbleche bezeichnet.

## Patentansprüche

1. Verfahren zur Aufbereitung von Klärschlämmen und/oder Industrieschlämmen mit organischen Anteilen mittels des Konversionsverfahrens, bei dem die Schlämme mechanisch vorentwässert und indirekt vorgetrocknet werden, im Innenraum eines indirekt beheizten Stetigförderers auf Konversionstemperatur aufgeheizt und bis zum Austrieb der flüchtigen Komponenten aus dem Feststoffprodukt auf Konversionstemperatur gehalten werden und die bei der Vortrocknung und der Konversion austretenden Brüden und das Trockengut weiterbehandelt werden, **dadurch gekennzeichnet**, daß die bei der Trocknung und Konversion ausgetriebenen Brüden und leichtflüchtigen Komponenten für sich in getrennten Apparaten direkt mit im Teilkreislauf fremdgekühlt gefahrenem Kondensat kondensiert werden und die nicht kondensierbaren Gasanteile aus den Brüden und leichtflüchtigen Komponenten zur Entsorgung einer thermischen Nachverbrennung zugeführt werden.

2. Verfahren nach Anspruch 1, **dadurch gekennzeichnet**, daß die Abwärme aus der thermischen Nachverbrennung wenigstens teilweise zur Erwärmung des Wärmeträgermediums der indirekten Trocknung verwandt wird.

3. Verfahren nach Anspruch 1 oder 2, **dadurch gekennzeichnet**, daß der Stetigförderer in der Konversionsphase über eine Heizkammer mit Rauchgasen aus Brennern für flüssige, feste oder gasförmige Brennstoffe oder deren Gemische beheizt wird und die Abwärme aus der Heizkammer zur Erwärmung des Wärmeträgermediums der indirekten Trocknung verwandt wird.

4. Verfahren nach den Ansprüchen 1 bis 4, **dadurch gekennzeichnet**, daß die flüchtigen Bestandteile und der Restbrüden aus dem Aufheiz- und Konversionsraum direkt mit dem aus Kondensat abgetrennten und fremdgekühlten Wasser und/oder Fremdwasser kondensiert wird.

5. Verfahren nach Anspruch 1, **dadurch gekennzeichnet**, daß das aus dem Kondensat der Konvertierung abgetrennte Wasser zur Entsorgung der thermischen Nachverbrennung zugeführt wird.

6. Verfahren nach Anspruch 1, **dadurch gekennzeichnet**, daß das Kondensat zwecks Reinigung von darin enthaltenen Feststoffpartikeln über einen mechanischen Flüssigkeitsfilter geleitet wird.

7. Verfahren nach Anspruch 1, **dadurch gekennzeichnet**, daß die mechanisch vorentwässerten Naßschlämme vor der indirekten Trocknung kontinuierlich mit Trockengut aus der indirekten Trocknung vermischt werden.

8. Verfahren nach Anspruch 7, **dadurch gekennzeichnet**, daß das Mischungsverhältnis mechanisch vorentwässerter Naßschlämme zu Trockengut so gewählt bzw. gesteuert wird, daß nach der Mischung ein Gesamttrockensubstanzgehalt von größer bzw. gleich 55 % erzielt wird.

9. Verfahren nach Anspruch 7, **dadurch gekennzeichnet**, daß aus dem Mischgut Pellets gebildet werden.

10. Verfahren nach Anspruch 1, **dadurch gekennzeichnet**, daß die den Konversionsraum verlassenden Feststoffe in heißem Zustand in einer Mahlanlage auf die gewünschte Sieblinie zerkleinert werden.

11. Verfahren nach Anspruch 10, **dadurch gekennzeichnet**, daß die Feststoffe während des Mahlvorganges mit der Mühlenluft direkt auf die Endlagertemperatur abgekühlt werden.

## Claims

1. Process for the treatment of sewage sludges or industrial sludges with organic constituents by means of the conversion process by which the sludges are mechanically pre-dehydrated and indirectly predried, reheated in the interior of an indirectly heated constant weight conveyor to the conversion temperature and kept at conversion temperature until the volatile constituents are expelled from the solid matter product and wherein the vapours escaping during drying and conversion and the dry substance are further treated, **characterized in that** the vapours expelled during drying and conversion and the light-volatile constituents for themselves are condensed in separate apparatuses directly with outside cooled condensate run in a partial circulation and in that the non-condensible gas constituents from the vapours and light-volatile constituents are passed on to a thermal post-combustion for disposal.

2. A process according to claim 1 **characterized in that** the effluent heat from the thermal post-combustion is at least partially utilized for heating-up of the heat carrier medium of the indirect drying.

3. A process according to claim 1 or 2, **characterized in that** the constant weight conveyor is heated during the conversion phase by a heating chamber with flue gases from the burners for liquid, solid or gaseous fuels or their mixtures and wherein the effluent heat from the heating chamber is utilized for heating-up of the heat carrier medium of the indirect drying.

4. A process according to any one claim of Claim 1 to 4, **characterized in that** the volatile constituents and residual vapours from the heating-up and conversion room are condensed directly with the outside cooled water and the water separated from the condensate and/or with foreign water.

5. A process according to Claim 1, **characterized in that** the water separated from the condensate of the conversion is passed on to a thermal post-combustion for disposal.

6. A process according to Claim 1, **characterized in that** the condensate is passed through a mechanical liquid filter for purification from solid matter particles contained therein.

7. A process according to Claim 1, **characterized in that** the mechanically pre-dehydrated wet sludges are mixed continuously with dry substance from the indirect drying prior to indirect drying.

8. A process according to Claim 7, **characterized in that** the mixture ratio of mechanically pre-dehydrated wet sludges vs. dry substance is so chosen and/or controlled that a total dry substance content of greater than and/or equal to 55 % is achieved after mixing.

9. A process according to Claim 7, **characterized in that** pellets are formed from the mixed stuff.

10. A process according to Claim 1, **characterized in that** the solid substances leaving the conversion room are crushed in hot status in a grinding unit to the desired sieve mesh size.

11. A process according to Claim 10, **characterized in that** the solid substances are cooled off during the grinding process with the grinding mill air directly to the end storage temperature.

## Revendications

1. Procédé de traitement de boues d'épuration ou de boues industrielles à parties organiques par le procédé de conversion selon lequel les boues sont pré-déshydratées mécaniquement et pré-séchées indirectement, amenées à une température de conversion dans l'intérieur d'un convoyeur continu chauffé indirectement et maintenues à cette température de conversion jusqu'à ce que les composants volatils s'échappent du produit solide et les buées générées lors du pré-séchage et de la conversion ainsi que le matériau sec sont traités ultérieurement
**caractérisé par le fait**
que les buées et les composants volatils s'échappant lors du séchage et de la conversion sont condensés directement chacun pour soi dans des appareils indépendants avec du condensat circulant dans le circuit partiel refroidi par ventilation forcée et que les parties de gaz non condensables venant des buées et des composants très volatils sont envoyées dans une installation de post-combustion pour être éliminées.

2. Procédé selon la revendication 1
**caractérisé par le fait**
que la chaleur perdue provenant de la post-combustion thermique est utilisée au moins partiellement pour réchauffer le fluide porteur de chaleur du séchage indirect.

3. Procédé selon la revendication 1 ou 2
**caractérisé par le fait**
qu'un convoyeur continu est chauffé pendant la phase de conversion avec des gaz de combustion provenant de brûleurs pour combustibles liquides, solides ou gazeux ou d'un mélange de ces combustibles et que la chaleur perdue provenant de la cellule de chauffage est utilisée pour réchauffer le fluide porteur de chaleur du séchage indirect.

4. Procédé selon les revendications 1 à 4
**caractérisé par le fait**
que les composans volatils et les buées résiduelles provenant de l'espace de chauffage et de l'espace de conversion sont condensés directement avec l'eau séparée du condensat et refroidie par ventilation forcée et/ou avec de l'eau extérieure.

5. Procédé selon la revendication 1
**caractérisé par le fait**
que l'eau séparée provenant du condensat est envoyée dans la post-combustion thermique pour être évacuée.

6. Procédé selon la revendication 1
**caractérisé par le fait**
que le condensat traverse un filtre liquide mécanique dans le but de nettoyer les particules solides qui y sont contenues.

7. Procédé selon la revendication 1
**caractérisé par le fait**
que les boues humides pré-déshydratées mécaniquement sont continuellement mélangées avant le séchage indirect avec du matériau séché provenant du séchage direct.

8. Procédé selon la revendication 7
**caractérisé par le fait**
que le rapport de mélange entre les boues humides pré-séchées mécaniquement et le matériau séché est choisi ou commandé de manière à ce que la teneur totale en substances sèches du mélange soit supérieure ou égale à 55%.

9. Procédé selon la revendication 7
**caractérisé par le fait**
que des boulettes sont formées à partir de ce mélange.

10. Procédé selon la revendication 1
**caractérisé par le fait**
que les produits solides quittant l'espace de conversion à l'état chaud sont broyés dans une installation de broyage jusqu'à ce que la courbe de tamisage soit atteinte.

11. Procédé selon la revendication 10
**caractérisé par le fait**
que les produits solides sont directement amenés à la température de stockage final en étant refroidis pendant le broyage par l'air de broyage.
